# DEMANDE DE BREVET EUROPEEN

(11) **EP 2 578 521 A1**
(43) Date de publication de la demande: **10.04.2013**
(21) Numéro de dépôt: 11008002.5
(22) Date de dépôt: 03.10.2011
(51) Int. Cl.: B65H 5/22, B65H 29/24, B31B 1/74, G01N 21/89

(54) **Dispositif de controle pour machine de traitment de découpes**

(71) Demandeur: BOBST MEX SA, 1031 Mex (CH)
(72) Inventeur: Bellino, Mario, 1033 Cheseaux-sur-Lausanne (CH); Binggeli, Pierre, 1009 Pully (CH); Favini, Dimitri, 1122 Romanel-sur-Morges (CH); Morisod, Jean-Bernard, 1029 Villars-Ste-Croix (CH); Toma, Claude, 1023 Crissier (CH)
(74) Mandataire: Poirier, Jean-Michel Serge

(57) **Abrégé**

La présente invention concerne un dispositif de contrôle 1 pour machine de traitement de découpes, comprenant des moyens 10 pour transporter de façon continue chaque découpe le long d'un chemin de circulation donné 5, ainsi que des moyens 30 pour inspecter la face imprimée de chaque découpe au cours de son transport.

L'invention est remarquable en ce que les moyens de transport 10 sont opérants au niveau de deux tronçons distincts du chemin de circulation 5, entre lesquels est intercalé un élément d'arrière-plan qui s'étend en regard des moyens d'inspection 30 et en arrière des découpes par rapport auxdits moyens d'inspection 30.

## Description

La présente invention concerne un dispositif permettant de contrôler la qualité de découpes lorsque ces dernières circulent dans une quelconque machine de traitement.

L'invention trouve une application particulièrement avantageuse, mais non exclusive, dans le domaine de la fabrication des boîtes pliantes.

Dans l'industrie de l'emballage, la fabrication des boîtes pliantes s'effectue traditionnellement en ligne, en pliant et en collant des découpes au moyen de machines communément appelées plieuses-colleuses. A cet égard, il est connu de contrôler la qualité des découpes au sein même de la plieuse-colleuse. On utilise pour cela un module spécifique qui est directement intégré dans la plieuse-colleuse, et qui est en mesure d'inspecter individuellement chaque découpe lorsque cette dernière passe à travers ledit module. Comme le déplacement des découpes s'accomplit faces imprimées tournées vers le bas au sein de la plieuse-colleuse, leur transport à travers le module de contrôle est réalisé en les maintenant par le dessus, tandis que leur inspection s'effectue par le dessous.

En pratique, le transport par le dessus des découpes s'opère en utilisant un convoyeur vacuum qui associe une pluralité de bandes transporteuses à un caisson vacuum positionné directement au-dessus. chaque découpe est ainsi maintenue par le dessus au niveau de sa face interne, de sorte que sa face imprimée, qui est tournée vers le bas, se trouve entièrement dégagée. L'inspection par le dessous est quant à elle menée au moyen d'une caméra qui est implantée sous le convoyeur vacuum, et qui fonctionne en contre-plongée. Associé à un système d'éclairage adéquat, la caméra effectue une prise de vue de chaque face imprimée au fur et à mesure que les découpes défilent.

Ce type de module présente toutefois l'inconvénient d'offrir des capacités de contrôle limitées, puisqu'il n'est en mesure de détecter que des défauts présents à l'intérieur de la découpe. On pense notamment ici à des erreurs d'impression (texte, couleur, etc.) et autres défauts d'aspect (trous, cassures, etc.).

Aussi, le problème technique à résoudre par l'objet de la présente invention, est de proposer un dispositif de contrôle pour machine de traitement de découpes, comprenant des moyens pour transporter de façon continue chaque découpe le long d'un chemin de circulation donné, ainsi que des moyens pour inspecter la face imprimée de chaque découpe au cours de son transport, dispositif qui permettrait d'éviter les problèmes de l'état de la technique en offrant notamment des capacités de contrôle sensiblement accrues.

La solution au problème technique posé consiste, selon la présente invention, en ce que les moyens de transport sont opérants au niveau de deux tronçons distincts du chemin de circulation, entre lesquels est intercalé un élément d'arrière-plan qui s'étend en regard des moyens d'inspection et en arrière des découpes par rapport auxdits moyens d'inspection.

Il est important de préciser que l'invention peut être intégrée dans tout type de machine de traitement de découpes. On pense notamment à une machine de façonnage au sens large du terme, comme par exemple une plieuse-colleuse, mais aussi à une simple unité de contrôle opérant de façon offline par rapport à la machine de façonnage.

Il est également bon de signaler que l'invention peut être mise en oeuvre quelle que soit la position de déplacement des découpes, moyennant bien entendu une disposition adéquate des moyens de transport, des moyens d'inspection et de l'élément d'arrière-plan, de part et d'autre du chemin de circulation des découpes.

C'est ainsi qu'il est possible de concevoir un dispositif de contrôle dans lequel le déplacement de chaque découpe est réalisé avec la face imprimée tournée vers le bas, par exemple en maintenant ladite découpe par le dessus au niveau de sa face interne, tandis que l'inspection de la face imprimée s'effectue par le dessous.

Mais il est également envisageable d'agencer un dispositif de contrôle de manière à ce que les moyens de transport déplacent chaque découpe avec sa face imprimée orientée vers le haut, ce qui implique obligatoirement une inspection par le dessus, et si nécessaire un maintien de la découpe par le dessous.

Enfin, il s'avère tout aussi concevable de développer un dispositif de contrôle dans lequel le déplacement des découpes s'opère dans un plan sensiblement vertical.

Quoi qu'il en soit, l'invention telle qu'ainsi définie présente l'avantage de permettre une grande diversité de contrôles, aussi bien à l'intérieur qu'à la périphérie de la face imprimée des découpes. En effet, l'inspection de chaque découpe est réalisée en utilisant en arrière-plan, un fond fixe et contrasté qui est à même de la faire ressortir distinctement, et plus particulièrement son pourtour. Il est ainsi parfaitement possible de vérifier la qualité du contour de la découpe, communément désigné par l'anglicisme « cut quality », ou le centrage de l'impression par rapport audit contour de découpe, habituellement défini par l'anglicisme « print to cut ».

La présence de l'élément d'arrière-plan à proximité directe du chemin de circulation des découpes, impose toutefois d'un point de vue structurel que les moyens de transport soient interrompus localement, précisément pour laisser place audit élément d'arrière-plan. Mais fonctionnellement parlant, il est indispensable que l'action des moyens de transport perdure dans cette zone de discontinuité, de façon à préserver le déplacement continu des découpes. Les moyens de transport sont donc conçus de telle sorte qu'ils exercent leurs fonctions de maintien et de transport au niveau de deux tronçons distincts mais successifs du chemin de circulation, qui s'étendent respectivement en amont et en aval de l'élément d'arrière-plan. Ces deux tronçons sont disposés de façon à être suffisamment espacés pour que l'élément d'arrière-plan puisse y être intercalé, tout en étant assez rapprochés pour qu'il y ait toujours au moins une portion de la découpe en contact avec les moyens de transport, lorsque ladite découpe passe devant l'élément d'arrière-plan.

La présente invention concerne en outre les caractéristiques qui ressortiront au cours de la description qui va suivre, et qui devront être considérées isolément ou selon toutes leurs combinaisons techniques possibles.

Cette description, donnée à titre d'exemple non limitatif, est destinée à mieux faire comprendre en quoi consiste l'invention et comment elle peut être réalisée. La description est par ailleurs donnée en référence aux dessins annexés dans lesquels:
La figure 1 illustre une plieuse-colleuse dans laquelle est intégré un dispositif de contrôle conforme à l'invention.
La fïgure 2 représente le dispositif de contrôle en perspective de dessus.
La figure 3 est une coupe longitudinale du dispositif de contrôle, où apparaissent notamment les moyens de transport et les moyens d'inspection.
La figure 4 montre de façon extrêmement schématique, la partie du dispositif de contrôle au niveau de laquelle s'opère l'inspection des découpes.
La figure 5 constitue une coupe transversale d'un caisson à vide équipant les moyens de transport.
La figure 6 constitue une vue analogue à la figure 4, mais qui détaille un mode de réalisation actuellement préféré de l'invention.
La figure 7 représente le dispositif de contrôle en vue latérale, depuis le côté amont de la plieuse-colleuse.
La figure 8 est une vue similaire à la figure 7, mais avec les moyens de transport relevés.
La figure 9 constitue une vue analogue à la figure 8, mais avec en plus une partie des moyens d'inspection relevée.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

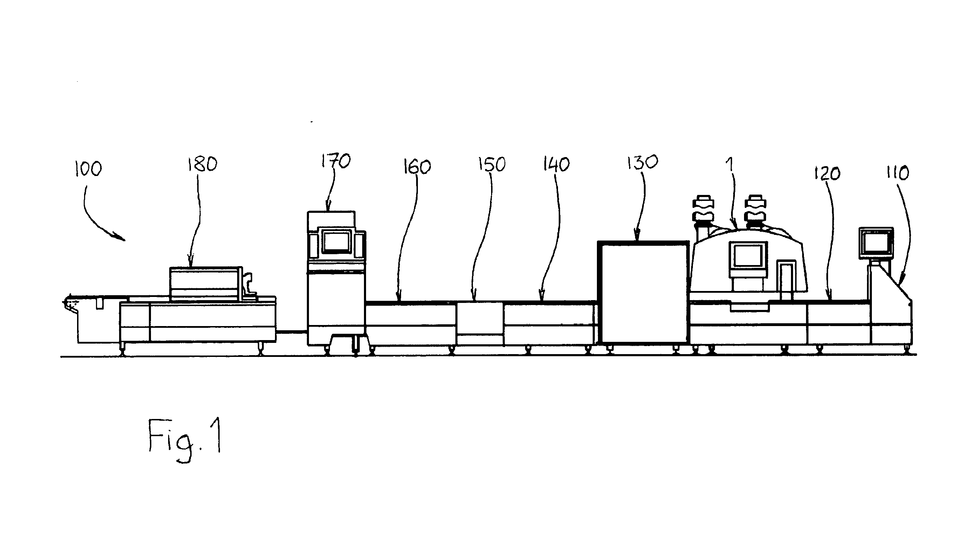

La figure 1 représente une plieuse-colleuse 100, c'est-à-dire une machine de traitement qui est chargée de plier et de coller des découpes 2 en vue de fabriquer des boîtes pliantes. Dotée d'une structure modulaire, cette plieuse-colleuse 100 est classiquement composée d'un margeur 110, d'un module d'alignement 120, d'un module d'embossage du braille 130, d'un module de précassage 140, d'un module d'encollage 150, d'un module de pliage 160, d'un module de transfert 170 et d'un module de réception 180. Ces différents éléments étant parfaitement connus de l'état de la technique, ils ne seront pas décrits en détail ici, tant structurellement que fonctionnellement.

Mais la figure 1 montre également que la plieuse-colleuse 100 est en outre pourvue d'un dispositif de contrôle 1 qui est intégré directement entre le module d'alignement 120 et le module d'embossage 130. Ce dispositif 1 est destiné à réaliser un contrôle qualité en ligne au sein même de la plieuse-colleuse 100, en inspectant de manière systématique toutes les découpes 2 qui y circulent avec leurs faces imprimées 3 tournées vers le bas, et donc fort logiquement avec leurs faces internes 4 orientées vers le haut.

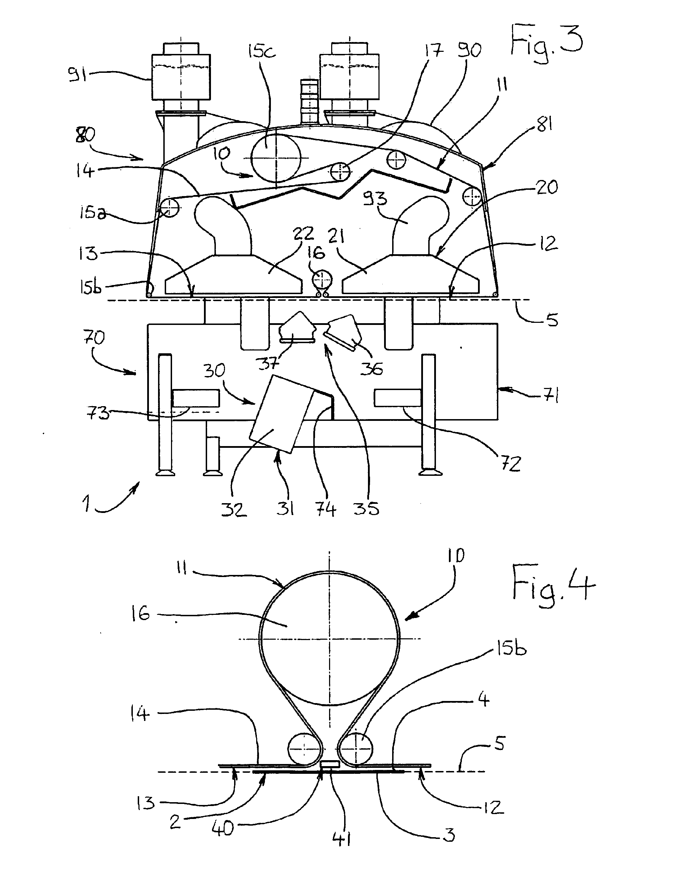

Dans ce mode particulier de réalisation, choisi uniquement à titre d'exemple, le dispositif de contrôle 1 comprend donc tout d'abord des moyens de transport 10 qui sont chargés de convoyer de façon continue chaque découpe 2 en la maintenant par le dessus au niveau de sa face interne 4, le long d'un chemin de circulation donné 5. Mais le dispositif de contrôle 1 dispose également de moyens d'inspection 30 qui sont quant à eux voués à inspecter par le dessous la face imprimée 3 de chaque découpe 2 au cours de son transport le long du chemin de circulation 5 qui traverse de part en part ledit dispositif de contrôle 1 (figure 3).

Conformément à l'objet de la présente invention, les moyens de transport 10 sont opérants au niveau de deux tronçons distincts du chemin de circulation 5, entre lesquels est placé un élément d'arrière-plan 40 qui est positionné de manière à s'étendre à la fois en regard des moyens d'inspection 30 et en arrière des découpes 2 par rapport auxdits moyens d'inspection 30.

Ainsi qu'on peut le voir sur les figures 3 et 4, les moyens de transport 10 sont ici constitués par un convoyeur vacuum 11 dont deux sections distinctes 12, 13 sont en mesure de transporter chaque découpe 2 au niveau respectivement des deux tronçons précédemment évoqués du chemin de circulation 5. Dans ces conditions, l'élément d'arrière-plan 40 est implanté entre les deux sections 12, 13 du convoyeur vacuum 11.

Selon une particularité de ce premier mode de réalisation, le convoyeur vacuum 11 est tout d'abord doté d'une bande transporteuse 14 dont le trajet de défilement vient tangenter chaque tronçon du chemin de circulation 5 des découpes 2, tout en contournant par derrière l'élément d'arrière-plan 40. Mais le convoyeur vacuum 11 est également pourvu de moyens d'aspiration 20 qui sont à même de plaquer chaque découpe 2 contre la bande transporteuse 14 au niveau de chacun des tronçons du chemin de circulation 5, réalisant ainsi la fonction de maintien dont sont chargés les moyens de transport 10.

Conformément à une variante de réalisation non représentée, les moyens de transport 10 peuvent de manière sensiblement équivalente être constitués par deux convoyeurs vacuum capables de transporter chaque découpe 2 au niveau respectivement de chaque tronçon du chemin de circulation 5. Dans cette hypothèse, l'élément d'arrière-plan 40 est alors implanté entre les deux convoyeurs vacuum en question.

Selon une particularité de ce second mode de réalisation, chaque convoyeur vacuum met en oeuvre d'une part une bande transporteuse dont le trajet de défilement vient tangenter le tronçon correspondant du chemin de circulation 5 des découpes 2, et d'autre part des moyens d'aspiration qui sont aptes à plaquer chaque découpe 2 contre la bande transporteuse au niveau dudit tronçon.

A ce stade de la description, il est important de préciser que dans le cadre de l'invention, la notion de « bande transporteuse » désigne de façon très générale une bande sans fin en matériau souple qui est supportée et entraînée par des organes rotatifs au moins partiellement motorisés. On pense notamment à un tapis, à une bande plus ou moins large, voire à une pluralité de courroies juxtaposées transversalement.

De préférence, et quel que soit le mode de réalisation retenu, les moyens d'aspiration 20 comportent au moins un caisson 21, 22 dans lequel est générée une dépression. Par ailleurs, chaque caisson 21, 22 comprend au moins une face ajourée 23 qui s'étend parallèlement au chemin de circulation 5. Enfin, la bande transporteuse 14 présente une structure perforée qui est en mesure de glisser contre chaque face ajourée 23 en la recouvrant sensiblement complètement. L'idée ici est de rendre chaque caisson 21, 22 relativement étanche afin de maximiser la dépression générée à l'intérieur, et de concentrer l'effet d'aspiration uniquement au niveau de la bande transporteuse 14 pour optimiser le maintien de chaque découpe 2.

Dans l'exemple de réalisation des figures 1 à 9, les moyens d'aspiration 20 mettent en oeuvre deux caissons distincts 21, 22 qui sont associés respectivement à chaque tronçon du chemin de circulation 5. Il est cependant entendu que de façon équivalente, les moyens d'aspiration 20 peuvent utiliser un caisson commun, mais doté de deux bouches d'aspiration respectivement dédiées à chaque tronçon du chemin de circulation 5.

De façon analogue dans le second mode de réalisation précédemment envisagé, chaque convoyeur vacuum peut disposer de son propre caisson, ou les deux convoyeurs vacuum peuvent partager un caisson commun.

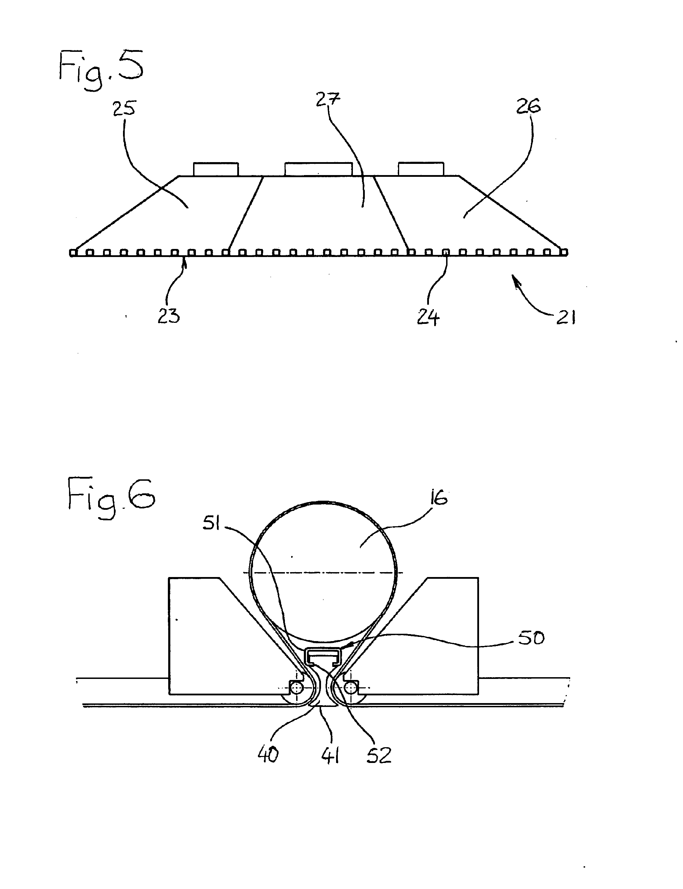

La figure 5 montre que la face ajourée 23 de chaque caisson 21, 22 consiste en une large ouverture en travers de laquelle est disposée longitudinalement une trentaine de barres 24 parallèles et régulièrement espacées, qui servent de support à la bande transporteuse 14.

On observe également sur cette représentation que de manière particulièrement avantageuse, chaque caisson 21, 22 comporte au moins un compartiment 25, 26 dans lequel la dépression peut être temporairement supprimée, c'est-à-dire dans lequel l'aspiration peut être momentanément coupée. Cette caractéristique permet d'adapter la capacité d'aspiration de chaque caisson 21, 22 en fonction de la forme et/ou de la taille et/ou du positionnement transversal des découpes 2. Dans cet exemple de réalisation, cela concerne les deux compartiments latéraux 25, 26 qui encadrent le compartiment central 27 dont le fonctionnement est permanent.

Selon une particularité de l'invention visible à la figure 3, le défilement de la bande transporteuse 14 est guidée par une pluralité d'organes de renvoi qui opèrent au niveau de sa face intérieure, dits organes de renvoi internes 15a, 15b, 15c, ainsi que par au moins un organe de renvoi qui coopère avec la face extérieure de ladite bande transporteuse 14, dit organe de renvoi externe 16, 17. Par ailleurs, la bande transporteuse 14 présente une longueur sensiblement supérieure au périmètre délimité par l'ensemble des organes de renvoi internes 15a, 15b, 15c. Enfin, la bande transporteuse 14 est montée amovible par simple démontage de chaque organe de renvoi externe 16, 17.

En l'absence d'organe de renvoi externe 16, 17, la bande transporteuse 14 n'est plus contrainte de rester en prise avec son système de guidage 15a, 15b, 15c, 16, 17. Elle s'étend alors librement autour de l'ensemble des organes de renvoi internes 15a, 15b, 15c. Et comme sa longueur s'avère nettement plus grande que le périmètre qui est délimité par les organes de renvoi internes 15a, 15b, 15c en question, la bande transporteuse 14 peut être facilement éloignée de ces derniers en vue d'être retirée du dispositif de contrôle 1.

On peut noter que dans cet exemple de réalisation, l'organe de renvoi interne 15c constitue l'organe d'entraînement du système de transport.

La figure 4 illustre clairement la façon dont se déroule le passage d'une découpe 2 devant l'élément d'arrière-plan 40. La découpe 2 arrive tout d'abord jusqu'à l'élément d'arrière-plan 40 en étant transportée par la seule section amont 12 du convoyeur vacuum 11. La découpe 2 continuant à avancer, sa partie avant vient progressivement en porte-à-faux par rapport à la section de transport amont 12, et donc assez vite en regard de l'élément d'arrière-plan 40. Au fur et à mesure de l'avance de la découpe 2, son bord avant finit par atteindre la section de transport aval 13, de sorte que ladite découpe 2 se retrouve à cheval entre les deux portions actives du convoyeur vacuum 11. Le déplacement de la découpe 2 se poursuit alors grâce à l'action simultanée des deux sections de transport 12, 13. Mais assez rapidement, la découpe 2 finit par quitter la section de transport amont 12, pour passer entièrement sur la seule section aval 13 qui peut alors l'entraîner vers la sortie du module de contrôle 1. Ainsi donc, au cours de son déplacement, la découpe 2 défile progressivement mais intégralement devant l'élément d'arrière-plan 40, ce qui permet aux moyens d'inspection 30 d'en capturer une image complète sur un fond stable.

Ainsi qu'on peut le voir distinctement sur la figure 4, l'élément d'arrière-plan 40 comporte une face dite de référence 41 qui est située en regard du chemin de circulation 5 des découpes 2. Cette face de référence 41 est remarquable en ce qu'elle est plane, et en ce qu'elle s'étend de façon sensiblement parallèle à la portion du chemin de circulation 5, qui est située directement en vis-à-vis.

De manière particulièrement avantageuse, la face de référence 41 s'étend de façon sensiblement affleurante par rapport au chemin de circulation 5 des découpes 2. Cela signifie en d'autres termes que la face de référence 41 peut être quasiment coplanaire avec le chemin de circulation 5, et être ainsi susceptible d'être effleurée par les découpes 2 au cours de leur déplacement. Mais cela veut également dire que la face de référence 41 peut se tenir légèrement en retrait du chemin de circulation 5, afin d'éviter les possibilités de contact avec les découpes 2.

Conformément à une autre caractéristique avantageuse, la face de référence 41 présente une largeur qui est sensiblement réduite par rapport à la longueur des découpes 2, ladite largeur et ladite longueur étant des dimensions considérées suivant la direction de déplacement desdites découpes 2. Cette particularité est destinée à optimiser le maintien et donc le transport de chaque découpe 2 au moment où cette dernière passe devant l'élément d'arrière-plan 40, en maximisant la surface de contact entre ladite découpe 2 et les moyens de transport 10. Mais cette caractéristique permet aussi avantageusement de rendre le dispositif de contrôle 1 compatible avec les formats de découpes les plus réduits.

De préférence, la face de référence 41 présente un aspect uniforme afin de faciliter la mise en oeuvre des moyens d'inspection 30, et notamment la lecture optique du contour de chaque découpe 2.

Dans cette même logique, la face de référence 41 présente avantageusement un aspect contrasté par rapport à celui du pourtour des découpes 2.

Selon une autre caractéristique avantageuse, l'élément d'arrière-plan 40 est réalisé dans un matériau à faible coefficient de frottement, c'est-à-dire un matériau qui est favorable aux glissements, mais qui présente aussi une forte résistance à l'usure. L'objectif est d'éviter une perte progressive de matière ou un changement de couleur au niveau de la face de référence 41, dans le cas où les découpes 2 seraient amenées à venir régulièrement au contact de l'élément d'arrière-plan 40.

Dans cet exemple de réalisation, et conformément à un mode de réalisation actuellement préféré de l'invention, l'élément d'arrière-plan 41 est réalisé en polyéthylène.

Ainsi qu'on peut le voir sur la représentation détaillée objet de la figure 6, l'élément d'arrière-plan 40 est par ailleurs monté amovible. Le but est ici de la rendre l'élément d'arrière-plan 40 facilement interchangeable, afin de pouvoir modifier la couleur du fond en fonction de l'aspect général des découpes 2 à traiter ; l'important étant de créer un contraste suffisant entre la découpe 2 et l'élément d'arrière-plan 40.

Dans cette logique, le dispositif de contrôle 1 est doté de moyens de fixation réversibles 50 qui sont en mesure de maintenir immobile l'élément d'arrière-plan 40 en position de fonctionnement. Dans l'exemple de réalisation de la figure 6, les moyens de fixation réversibles 50 sont constitués par un rail de maintien 51 qui est fixé transversalement à l'intérieur du dispositif de contrôle 1, et qui est à même de recevoir l'élément d'arrière-plan 40 par simple emboîtement axial. L'ensemble est ménagé de manière à ce que deux ailes latérales 52 du rail de maintien 51 viennent s'engager dans deux rainures qui sont ménagées longitudinalement de part et d'autre du corps de l'élément d'arrière-plan 40.

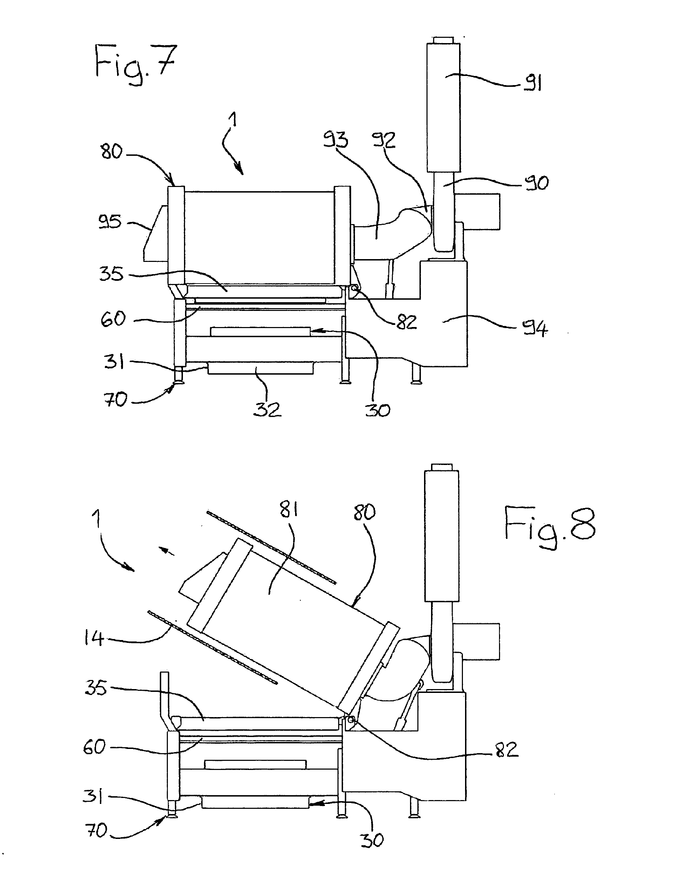

On a vu précédemment que dans cet exemple de réalisation, le déplacement de chaque découpe 2 s'opère en la maintenant par le dessus au niveau de sa face interne 4 qui est orientée vers le haut. Dans une telle configuration, le dispositif de contrôle 1 est en outre avantageusement pourvu d'un bac de récupération 60 qui s'étend sous le chemin de circulation 5 (figures 7 à 9), et qui est chargé de recevoir chaque découpe 2 présente au niveau dudit chemin de circulation 5 dès lors que le maintien exercé par les moyens de transport 10 devient inopérant. l'objectif est d'empêcher que les découpes 2 ne tombent par terre en cas de défaillance ou d'arrêt du système de transport vacuum, comme lors d'un stop d'urgence par exemple ou d'une défaillance des moyens d'aspiration 20. Bien entendu, le bac de récupération 60 est conformé de manière à ne pas perturber l'action des moyens d'inspection 30, tant au niveau de la lecture optique, que de l'éclairage des découpes 2.

Selon une autre particularité de l'invention, visible en comparant les figures 7 et 8, les moyens de transport 10 et l'élément d'arrière-plan 40 sont solidairement montés mobiles en déplacement entre une position d'utilisation dans laquelle ils sont placés juste au dessus du chemin de circulation 5 et sont opérationnels pour déplacer chaque découpe 2 (figure 7), et une position de maintenance dans laquelle ils sont disposés à distance dudit chemin de circulation 5 dans un espace directement accessible par un opérateur (figure 8).

En pratique, les moyens de transport 10 et l'élément d'arrière-plan 40 sont ici fixés à un bâti 81 qui est monté pivotant par rapport à un axe horizontal 82. Ce dernier est disposé latéralement au niveau du côté du dispositif de contrôle 1 qui correspond au côté opposé conducteur de la plieuse-colleuse 100, et il s'étend longitudinalement par rapport à la direction de déplacement des découpes 2. L'intérêt d'une telle mobilité est notamment de pouvoir contrôler la bande transporteuse 14, démonter le cas échéant ladite bande 14 conformément à la figure 10, accéder aux moyens d'inspection 30 depuis l'intérieur du dispositif de contrôle 1, déplacer au moins une partie des moyens d'inspection 30, accéder au bac de récupération 60, etc.

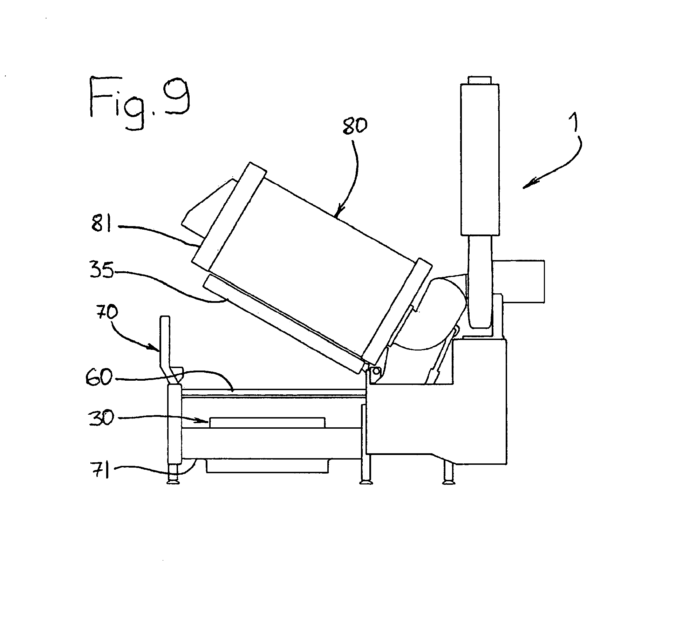

Dans l'exemple de réalisation choisi pour illustrer l'invention, les moyens d'inspection 30 sont essentiellement composés, d'une part, de moyens de lecture optique 31 de la zone où chaque découpe 2 passe devant l'élément d'arrière-plan 40, dite zone d'inspection, et d'autre part, de moyens d'éclairage 35 de ladite zone d'inspection (figure 3). Aussi, et de manière particulièrement avantageuse, les moyens d'éclairage 35 sont montés mobiles en déplacement entre une position d'utilisation dans laquelle ils sont placés sous le chemin de circulation 5 et sont opérationnels pour éclairer la zone d'inspection (figure 7), et une position de maintenance dans laquelle ils sont disposés à distance du chemin de circulation 5, dans un espace permettant le libre accès aux moyens de lecture optique 31 (figure 9). La comparaison des figures 7 et 9 permet de mettre clairement en évidence cette mobilité.

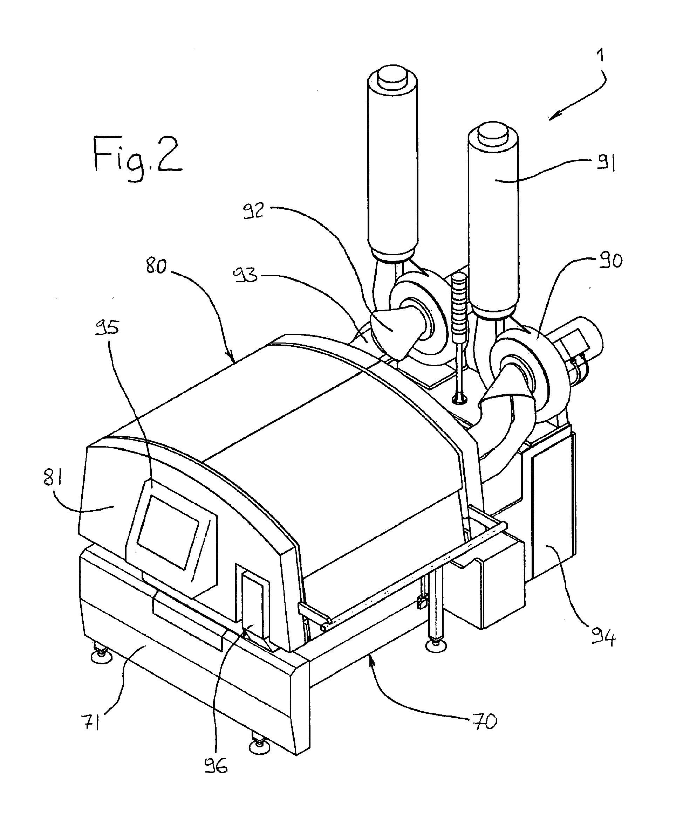

Les figures 2, 3 et 7 montrent qu'au final, le dispositif de contrôle 1 se présente sous la forme d'un module qui est principalement composé de deux parties 70, 80 délimitées par le chemin de circulation 5 des découpes 2.

Dans ce mode particulier de réalisation, la partie inférieure 70 supporte à la fois les moyens d'inspection 30 et le bac de récupération 60. Elle est essentiellement composé d'un bâti 71 qui est monté sur pieds, et qui est composé d'un assemblage de poutres 72, 73 et de traverses 74. Les moyens de lecture optique 31 sont constitués par une camera 32 qui est fixée sur la traverse 74 de manière à opérer en contre-plongée. Les moyens d'éclairage 35 sont quant à eux composés de deux luminaires 36, 37 qui sont voués à l'inspection respectivement des découpes standards et des découpes métallisées.

La partie supérieure 80 du dispositif de contrôle 1 repose elle aussi sur un bâti 81 qui est caréné pour des raison de protection et d'acoustique. Ce bâti 81 intègre notamment les moyens de transport 10, les moyens d'aspiration 20 et l'élément d'arrière-plan 40.

La figure 2 fait plus particulièrement apparaître que les moyens d'aspiration 20 de cet exemple de réalisation utilisent deux pompes à dépression 90 qui sont dotées de silencieux 91 et qui son couplées aux caissons 21, 22 par l'intermédiaire de tuyères 92 et de conduites 93. Mais cette représentation montre également la présence d'une armoire électrique 94, d'un poste de commande 95 des moyens d'inspection 30, ainsi que d'un poste de commande 96 du relevage de la partie supérieure 80 du dispositif de contrôle 1.

Bien entendu, l'invention concerne plus généralement toute machine de traitement 100 de découpes 2, qui intègre au moins un dispositif de contrôle 1 tel que précédemment défini.

## Revendications

1. Dispositif de contrôle (1) pour machine de traitement (100) de découpes (2), comprenant des moyens (10) pour transporter de façon continue chaque découpe (2) le long d'un chemin de circulation donné (5), ainsi que des moyens (30) pour inspecter la face imprimée (3) de chaque découpe (2) au cours de son transport, **caractérisé en ce que** les moyens de transport (10) sont opérants au niveau de deux tronçons distincts du chemin de circulation (5), entre lesquels est intercalé un élément d'arrière-plan (40) qui s'étend en regard des moyens d'inspection (30) et en arrière des découpes (2) par rapport auxdits moyens d'inspection (30).

2. Dispositif de contrôle (1) selon la revendication 1, **caractérisé en ce que** les moyens de transport (10) comportent un convoyeur vacuum (11) dont deux sections distinctes (12, 13) sont aptes à transporter chaque découpe (2) au niveau respectivement des deux tronçons du chemin de circulation (5), et **en ce que** l'élément d'arrière-plan (40) est implanté entre lesdites sections (12, 13) du convoyeur vacuum (11).

3. Dispositif de contrôle (1) selon la revendication 2, **caractérisé en ce que** le convoyeur vacuum (11) comporte une bande transporteuse (14) dont le trajet de défilement vient tangenter chaque tronçon du chemin de circulation (5) des découpes (2), tout en contournant par derrière l'élément d'arrière-plan (40), ainsi que des moyens d'aspiration (20) qui sont aptes à plaquer chaque découpe (2) contre la bande transporteuse (14) au niveau de chacun desdits tronçons du chemin de circulation (5).

4. Dispositif de contrôle (1) selon la revendication 1, **caractérisé en ce que** les moyens de transport (10) comportent deux convoyeurs vacuum aptes à transporter chaque découpe (2) au niveau respectivement de chaque tronçon du chemin de circulation (5), et **en ce que** l'élément d'arrière-plan (40) est implanté entre lesdits convoyeurs vacuum.

5. Dispositif de contrôle (1) selon la revendication 4, **caractérisé en ce que** chaque convoyeur vacuum comporte une bande transporteuse dont le trajet de défilement vient tangenter le tronçon correspondant du chemin de circulation (5) des découpes (2), ainsi que des moyens d'aspiration qui sont aptes à plaquer chaque découpe (2) contre la bande transporteuse au niveau dudit tronçon du chemin de circulation (5).

6. Dispositif de contrôle (1) selon l'une des revendications 3 ou 5, **caractérisé en ce que** les moyens d'aspiration (20) comportent au moins un caisson (21, 22) dans lequel est générée une dépression, **en ce que** chaque caisson (21, 22) comprend au moins une face ajourée (23) qui s'étend parallèlement au chemin de circulation (5), et **en ce que** la bande transporteuse (14) présente une structure perforée qui est apte à glisser contre chaque face ajourée (23) en la recouvrant sensiblement complètement.

7. Dispositif de contrôle (1) selon la revendication 6, **caractérisé en ce que** chaque caisson (21, 22) comporte au moins un compartiment (25, 26) dans lequel l'aspiration peut être momentanément coupée.

8. Dispositif de contrôle (1) selon l'une des revendications 3 ou 5, **caractérisé en ce que** le défilement de la bande transporteuse (14) est guidée par une pluralité d'organes de renvoi internes (15a, 15b, 15c) qui opèrent au niveau de sa face intérieure, ainsi que par au moins un organe de renvoi externe (16, 17) qui coopère avec la face extérieure de ladite bande transporteuse (14), **en ce que** la bande transporteuse (14) présente une longueur sensiblement supérieure au périmètre délimité par l'ensemble des organes de renvoi internes (15a, 15b, 15c), et **en ce que** la bande transporteuse (14) est montée amovible par simple démontage de chaque organe de renvoi externe (16, 17).

9. Dispositif de contrôle (1) selon l'une quelconque des revendications 1 à 8, **caractérisé en ce qu'**en regard du chemin de circulation (5) des découpes (2), l'élément d'arrière-plan (40) comporte une face de référence (41) qui est plane, et qui s'étend de façon sensiblement parallèle à la portion dudit chemin de circulation (5), située directement en vis-à-vis.

10. Dispositif de contrôle (1) selon la revendication 9, **caractérisé en ce que** la face de référence (41) s'étend de façon sensiblement affleurante par rapport au chemin de circulation (5) des découpes (2).

11. Dispositif de contrôle (1) selon l'une des revendications 9 ou 10, **caractérisé en ce que** la face de référence (41) présente une largeur sensiblement réduite par rapport à la longueur des découpes (2), ladite largeur et ladite longueur étant des dimensions considérées suivant la direction de déplacement desdites découpes (2).

12. Dispositif de contrôle (1) selon l'une quelconque des revendications 9 à 11, **caractérisé en ce que** la face de référence (41) présente un aspect uniforme.

13. Dispositif de contrôle (1) selon l'une quelconque des revendications 9 à 12, **caractérisé en ce que** la face de référence (41) présente un aspect contrasté par rapport à celui du pourtour des découpes (2).

14. Dispositif de contrôle (1) selon l'une quelconque des revendications 1 à 13, **caractérisé en ce que** l'élément d'arrière-plan (40) est réalisé dans un matériau à faible coefficient de frottement.

15. Dispositif de contrôle (1) selon l'une quelconque des revendications 1 à 14, **caractérisé en ce que** l'élément d'arrière-plan (40) est monté amovible, par l'intermédiaire de moyens de fixation réversibles (50) qui sont aptes à le maintenir immobile en position de fonctionnement.

16. Dispositif de contrôle (1) selon l'une quelconque des revendications 1 à 15, **caractérisé en ce que** les moyens de transport (10) déplaçant chaque découpe (2) en la maintenant par le dessus au niveau de sa face interne (4) tournée vers le haut, le dispositif de contrôle (1) comporte un bac de récupération (60) qui s'étend sous le chemin de circulation (5) des découpes (2), et qui est apte à recevoir chaque découpe (2) présente au niveau dudit chemin de circulation (5) dès lors que le maintien exercé par les moyens de transport (10) devient inopérant.

17. Dispositif de contrôle (1) selon l'une quelconque des revendications 1 à 16, **caractérisé en ce que** les moyens de transport (10) et l'élément d'arrière-plan (40) sont solidairement montés mobiles en déplacement entre une position d'utilisation dans laquelle ils sont placés à proximité directe du chemin de circulation (5) et sont opérationnels pour déplacer chaque découpe (2), et une position de maintenance dans laquelle ils sont disposés à distance dudit chemin de circulation (5) dans un espace directement accessible par un opérateur.

18. Dispositif de contrôle (1) selon l'une quelconque des revendications 1 à 17, **caractérisé en ce que** les moyens d'inspection (30) comprenant des moyens de lecture optique (31) de la zone où chaque découpe (2) passe devant l'élément d'arrière-plan (40), dite zone d'inspection, ainsi que des moyens d'éclairage (35) de ladite zone d'inspection, les moyens d'éclairage (35) sont montés mobiles en déplacement entre une position d'utilisation dans laquelle ils sont placés à proximité directe du chemin de circulation (5) et sont opérationnels pour éclairer la zone d'inspection, et une position de maintenance dans laquelle ils sont disposés à distance du chemin de circulation (5) 5 dans un espace permettant le libre accès aux moyens de lecture optique (31).

19. Machine de traitement (100) de découpes (2), **caractérisée en ce qu'**elle comporte au moins un dispositif de contrôle (1) selon l'une quelconque des revendications précédentes.
